(19) Europäisches Patentamt
European Patent Office
Office européen des brevets

(11) EP 1 996 628 B1

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(21) Anmeldenummer: **07711619.2**

(22) Anmeldetag: **21.02.2007**

(51) Int Cl.:
***C08F 2/38*** *(2006.01)* ***C08F 2/44*** *(2006.01)*

(86) Internationale Anmeldenummer:
**PCT/EP2007/001495**

(87) Internationale Veröffentlichungsnummer:
**WO 2007/107222 (27.09.2007 Gazette 2007/39)**

# (54) REDISPERGIERBARE NANOPARTIKEL

REDISPERSIBLE NANOPARTICLES

NANOPARTICULE REDISPERSABLE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.03.2006 DE 102006012467**

(43) Veröffentlichungstag der Anmeldung:
**03.12.2008 Patentblatt 2008/49**

(73) Patentinhaber: **Merck Patent GmbH**
**64293 Darmstadt (DE)**

(72) Erfinder:
- **KOCH, Matthias**
  **65183 Wiesbaden (DE)**
- **JONSCHKER, Gerhard**
  **64646 Heppenheim (DE)**
- **PAHNKE, Joerg**
  **64285 Darmstadt (DE)**

(56) Entgegenhaltungen:
**EP-A1- 0 541 272**
**WO-A-03/000760**
**WO-A-2005/000914**
**WO-A-2005/070820**
**WO-A-2005/105930**
**FR-A- 2 850 661**
**US-A1- 2002 128 502**
**US-A1- 2003 199 653**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft redispergierbare Nanopartikel, Verfahren zu deren Herstellung sowie deren Verwendung in Formulierungen, Lacken, Farben und Kunststoffen oder deren Vorstufen.

Nanopartikel werden meist in wässriger Dispersion hergestellt und müssen vielfach in organische Medien überführt werden. Wird dabei beispielsweise das hydrophile Nanoteilchen zu schnell in eine unpolare Umgebung gebracht, kommt es zur Agglomeration der Teilchen. Aus diesem Grund beruhen die gängigen Verfahren meist auf einem sehr langsamen Lösungsmitteltausch, oft über vermittelnde Lösungsmittel in großer Menge. Diese mehrstufigen Prozesse sind langsam und aufwendig.

Alternative Verfahren gehen von agglomerierten Nanopartikeln aus und dispergieren diese unter Einsatz hoher Scherkräfte bei gleichzeitiger Zugabe von Oberflächenmodifikatoren.

WO 03/000760 offenbart ein Verfahren zur Herstellung einer wässrigen Dispersion von aus Polymerisat und feinteiligem anorganischem Feststoff aufgebauten Partikeln, (Kompositpartikel), bei dem wenigstens ein ethylenisch ungesättigtes Monomer in wässrigem Medium dispers verteilt und nach der Methode der radikalisch wässrigen Emulsionspolymerisation polymerisiert wird,

Die oben genannten Verfahren haben den Nachteil, dass sie entweder sehr aufwendig und einen hohen Verbrauch an Lösungsmittel bedingen, oder die Verfahren hohe Scherkräfte erfordern, die eine vollständige Zerschlagung der Agglomerate nicht gewährleistet.

Es besteht daher ein Bedarf an Nanopartikeln und Verfahren zu ihrer Herstellung, die in wässrigen Medien hergestellt und ausgehend von diesen wässrigen Dispersionen in organische Medien redispergiert werden können.

Die vorliegende Aufgabe wird durch die Bereitstellung redispergierbarer Nanopartikel sowie der Bereitstellung von Verfahren zu ihrer Herstellung gemäß der vorliegenden Erfindung gelöst.

Demgemäß ist ein erster Gegenstand der vorliegenden Erfindung die Bereitstellung von redispergierbaren Nanopartikeln, erhältlich durch

a) Aufbringen mindestens eines Oberflächenmodifizierungsmittels, wobei mindestens ein Oberflächenmodifizierungsmittel mindestens eine funktionelle Gruppe ausgewählt aus der Gruppe umfassend Thiole, Sulfide, Disulfide oder Polysulfide aufweist, auf in einem Lösungsmittel dispergierte Nanopartikel und
b) radikalische Polymerisation in Gegenwart organischer Monomere, wobei das in Schritt a) aufgebrachte Oberflächenmodifizierungsmittel mit mindestens einer funktionellen Gruppe ausgewählt aus der Gruppe umfassend Thiole, Sulfide, Disulfide oder Polysulfide als Radikalkettenüberträger fungiert und wobei die Nanopartikel auf Sulfaten oder Carbonaten von Erdalkaliverbindungen oder auf Oxiden bzw. Hydroxiden von Silizium, Titan, Zink, Aluminium, Cer, Cobalt, Chrom, Nickel, Eisen, Yttrium oder Zirkonium oder Mischungen hieraus basieren, die optional mit Metall-Oxiden bzw. -Hydroxiden beschichtet sein können, oder auf mit Metall-Oxiden bzw. -Hydroxiden beschichteten Metallen, wie beispielsweise Ag, Cu, Fe, Au, Pd, Pt oder Legierungen basieren und wobei der Anteil des Kerns am gesamten Partikel 10 - 80 Gew.-% beträgt.

Verfahren zur Herstellung von redispergierbaren Nanopartikeln umfassend die Schritte

a) Aufbringen mindestens eines Oberflächenmodifizierungsmittels, wobei mindestens ein Oberflächenmodifizierungsmittel mindestens eine funktionelle Gruppe ausgewählt aus der Gruppe umfassend Thiole, Sulfide, Disulfide oder Polysulfide aufweist, auf in einem Lösungsmittel dispergierte Nanopartikel und
b) radikalische Polymerisation in Gegenwart organischer Monomere, wobei das in Schritt a) aufgebrachte Oberflächenmodifizierungsmittel mit mindestens einer funktionellen Gruppe ausgewählt aus der Gruppe umfassend Thiole, Sulfide, Disulfide oder Polysulfide als Radikalkettenüberträger fungiert, sind ebenfalls Gegenstand der vorliegenden Erfindung.

In einer weiteren Ausführungsform der vorliegenden Erfindung können die Nanopartikel vor Aufbringen des Oberflächenmodifizierungsmittels in einem Lösungsmittel dispergiert werden, es können aber auch Dispersionen von Nanopartikeln direkt eingesetzt werden. Ebenso ist die Herstellung der Nanopartikel in Dispersion und das nachfolgende Aufbringen der Oberflächenmodifizierungsmittel ohne vorheriges Abtrennen der Partikel möglich.

Das oben genannte Lösungsmittel ist ausgewählt aus Wasser, organischen Lösungsmitteln oder aus Gemischen hieraus.

Erst durch die erfindungsgemäßen Verfahren werden Nanopartikel erhältlich, die sich ohne größere Probleme und Ausbeuteverluste in beliebigen Medien und Lösungsmitteln, insbesondere organischen hydrophoben Lösungsmitteln, redispergieren lassen.

Erfindungswesentlich ist die mindestens zweistufige Belegung der Nanopartikel. Dazu werden in einer ersten Stufe die Nanopartikel mit mindestens einem Oberflächenmodifizierungsmittel umgesetzt, wobei mindestens ein Oberflächenmodifizierungsmittel mindestens eine funktionelle Gruppe ausgewählt aus der Gruppe umfassend Thiole, Sulfide, Disulfide aufweist. Falls nötig kann auf die Nanopartikel eine Zwischenschicht, bevorzugt aus $SiO_2$ oder Melamin, aufgebracht werden, bevor die Oberflächenmodifizierungsmittel aufgebracht werden.

Vorzugsweise handelt es sich um eine chemische Öberflächenmodifizierung, das heißt die Anbindung erfolgt über Wasserstoffbrückenbindungen, elektrostatische Wechselwirkungen, Chelatbindungen oder über kovalente Bindungen. Vorzugsweise ist das Oberflächenmodifizierungsmittel kovalent an die Oberfläche des Nanopartikels gebunden.

Geeignete Nanopartikel werden ausgewählt aus der Gruppe bestehend aus hydrophilen and hydrophoben, insbesondere hydrophilen, Nanopartikeln auf der Basis von Sulfaten oder Carbonaten von Erdalkaliverbindungen oder von Oxiden bzw. Hydroxiden von Silizium, Titan, Zink, Aluminium, Cer, Cobalt, Chrom, Nickel, Eisen, Yttrium oder Zirkonium oder Mischungen hieraus, die optional mit Metall-Oxiden bzw. -Hydroxiden, beispielsweise von Silizium, Zirkonium, Titan, Aluminium beschichtet sein können oder mit Metall-Oxiden bzw. -Hydroxiden, beispielsweise von Silizium, Zirkonium, Titan, Aluminium, beschichteten Metallen, wie beispielsweise Ag, Cu, Fe, Au, Pd, Pt oder Legierungen. Die einzelnen Oxide können auch als Gemische vorliegen. Vorzugsweise ist das Metall des Metall-Oxids bzw. - Hydroxids Silizium. Vorzugsweise weisen die Partikel eine mittlere Teilchengröße, bestimmt mittels eines Malvern ZETASIZER (Partikel-Korrelations-Spektroskopie, particle correlation spectroscopy, PCS) bzw. Transmissionselektronenmikroskop, von 3 bis 200 nm, insbesondere von 5 bis 30 nm und ganz besonders bevorzugt von 6 bis 20 nm auf. In speziellen ebenfalls bevorzugten Ausführungsformen der vorliegenden Erfindung ist die Verteilung der Teilchengrößen eng, d.h. die Schwankungsbreite beträgt weniger als 100 % des Mittelwertes, insbesondere bevorzugt maximal 50 % des Mittelwertes.

Besonders bevorzugt sind die Nanopartikel ausgewählt aus $SiO_2$-Partikeln, oder sie sind ausgewählt aus ZnO- oder Ceroxid-Partikeln oder $TiO_2$-Partikeln, die optional mit Metall-Oxiden bzw. -Hydroxiden, beispielsweise von Silizium, Zirkonium, Titan, Aluminium, beschichtet sein können.

Im Falle von ZnO- oder Ceroxid-Partikeln können die erfindungsgemäßen Nanopartikel auf Grund der Absorptionseigenschaften von Zinkoxid oder Ceroxid als UV-Absorber eingesetzt werden. Geeignete Zinkoxid-Partikel mit einer Partikelgröße von 3 bis 50 nm sind beispielsweise erhältlich durch ein Verfahren bei dem in einem Schritt a) ein oder mehrere Precursoren für die ZnO-Nanopartikel in einem organischen Lösungsmittel zu den Nanopartikeln umgesetzt werden, und in einem Schritt b) das Wachstum der Nanopartikel durch Zugabe von mindestens einem Modifikator, der Precursor für Silica ist, beendet wird, wenn im UV/VIS Spektrum der Reaktionslösung die Absorptionskante den gewünschten Wert erreicht hat. Das Verfahren sowie die geeigneten Modifikatoren und Vefahrensparameter sind in DE 10 2005 056622.7 beschrieben.

Alternativ lassen sich geeignete Zinkoxid-Partikel herstellen durch ein Verfahren, bei dem in einem Schritt a) ein oder mehrere Precursoren für die ZnO-Nanopartikel in einem organischen Lösungsmittel zu den Nanopartikeln umgesetzt werden, und in einem Schritt b) das Wachstum der Nanopartikel durch Zugabe mindestens eines Copolymeren aus mindestens einem Monomer mit hydrophoben Resten und mindestens einem Monomer mit hydrophilen Resten beendet wird, wenn im UV/VIS Spektrum der Reaktionslösung die Absorptionskante den gewünschten Wert erreicht hat. Dieses Verfahren sowie die geeigneten Copolymere, Monomere und Verfahrensparameter sind in DE 10 2005 056621.9 beschrieben.

Es können auch Nanohektorite, die beispielsweise von der Firma Südchemie unter der Marke Optigel ® oder von der Firma Laporte unter der Marke Laponite ® vertrieben werden, verwendet werden. Ganz besonders bevorzugt sind auch Kieselsole ($SiO_2$ in Wasser), hergestellt aus ionengetauschtem Wasserglas.

Gängige Verfahren zur Herstellung oberflächenmodifizierter Nanopartikel gehen von wässrigen Teilchendispersionen aus, denen das Oberflächenmodifizierungsmittel zugesetzt wird. Die Umsetzung mit den Oberflächenmodifizierungsmitteln kann aber auch in einem organischen Lösungsmittel oder in Lösungsmittelgemischen durchgeführt werden. Dies gilt insbesondere für ZnO-Nanopartikel. Bevorzugte Lösungsmittel sind Alkohole oder Ether, wobei die Verwendung von Methanol, Ethanol, Diethylether, Tetrahydrofuran und/oder Dioxan oder Mischungen davon insbesondere bevorzugt ist. Als besonders geeignetes Lösungsmittel hat sich dabei Methanol erwiesen. Bei der Umsetzung können gegebenenfalls auch Hilfsstoffe zugegen sein, wie z.B. Tenside oder Schutzkolloide (z.B. Hydroxypropylcellulose).

Als Oberflächenmodifizierungsmittel eignen sich insbesondere organofunktionelle Silane, quartäre Ammoniumverbindungen, Carbonsäuren, ß-Diketonate, Phosphonate, Phosphonium- und Sulfoniumverbindungen oder Gemische hieraus. Mindestens eines der eingesetzten Oberflächenmodifizierungsmittel weist mindestens eine funktionelle Gruppe, ausgewählt aus der Gruppe umfassend Thiole, Sulfide oder Disulfide, auf. Bevorzugt sind die Oberflächenmodifizierungsmittel aus der Gruppe der organofunktionellen Silane ausgewählt.

Die Oberflächenmodifizierungsmittel können alleine, als Gemische oder im Gemisch mit weiteren, ggf. nichtfunktionellen Oberflächenmodifizierungsmitteln eingesetzt werden.

Die beschriebenen Anforderungen an Oberflächenmodifizierungsmittel erfüllt insbesondere erfindungsgemäß ein Haftvermittler, der zwei oder mehr funktionelle Gruppen trägt. Eine Gruppe des Haftvermittlers reagiert chemisch mit der Oxidoberfläche des Nanopartikels. Hier kommen insbesondere Alkoxysilylgruppen (z.B. Methoxy-, Ethoxysilane),

Halogensilane (z.B. Chlor-) oder saure Gruppen von Phosphorsäureestern- bzw. Phosphonsäuren und Phosphonsäureestern oder Carbonsäuren in Betracht. Über einen mehr oder weniger langen Spacer sind die beschriebenen Gruppen mit einer zweiten, funktionellen Gruppe verknüpft. Bei diesem Spacer handelt es sich um unreaktive Alkylketten, Siloxane, Polyether, Thioether oder Urethane bzw. Kombinationen dieser Gruppierungen der allgemeinen Formel $(C,Si)_nH_m(N,O,S)_x$ mit n=1-50, m=2-100 und x=0-50. Bei der funktionellen Gruppe handelt es sich um Thiol-, Sulfid- Polysulfid-, insbesondere Tetrasulfid-, oder Disulfidgruppen.

Neben den Thiol-, Sulfid-, Polysulfid- oder Disulfidgruppen kann der oben beschriebene Haftvermittler weitere funktionelle Gruppen aufweisen. Bei den zusätzlichen funktionellen Gruppen handelt es sich insbesondere um Acrylat-, Methacrylat-, Vinyl-, Amino-, Cyano-, Isocyanat-, Epoxy-, Carboxyoder Hydroxygruppen.

Oberflächenmodifizierungsmittel auf Silanbasis sind beispielsweise in DE 40 11 044 C2 beschrieben. Oberflächenmodifizierungsmittel auf Phosphorsäurebasis sind u.a. als Lubrizol® 2061 and 2063 von der Firma LUBRIZOL (Fa. Langer&Co.) erhältlich. Ein geeignetes Silan ist beispielsweise Mercaptopropyltrimethoxysilan. Dieses und weitere Silane sind kommerziell z.B. bei ABCR GmbH & Co., Karlsruhe, oder der Firma Sivento Chemie GmbH, Düsseldorf, erhältlich.Auch Mercaptophosphonsäure bzw. Mercaptophosphonsäurediethylester können als Haftvermittler hier aufgeführt werden.

Erfindungsgemäß besonders bevorzugt ist es dabei, wenn es sich bei dem Oberflächenmodifizierungsmittel um amphiphile Silane gemäß der allgemeinen Formel $(R)_3Si\text{-}S_P\text{-}A_{hp}\text{-}B_{hb}$, wobei die Reste R gleich oder verschieden sein können und hydrolytisch abspaltbare Reste darstellen, $S_P$ entweder -O- oder geradkettiges oder verzweigtes Alkyl mit 1-18 C-Atomen, geradkettiges oder verzweigtes Alkenyl mit 2-18 C-Atomen und einer oder mehreren Doppelbindungen, geradkettiges oder verzweigtes Alkinyl mit 2-18 C-Atomen und einer oder mehreren Dreifachbindungen, gesättigtes, teilweise oder vollständig ungesättigtes Cycloalkyl mit 3-7 C-Atomen, das mit Alkylgruppen mit 1-6 C-Atomen substituiert sein kann bedeutet, $A_{hp}$ einen hydrophilen Block bedeutet, $B_{hb}$ einen hydrophoben Block bedeutet und wobei mindestens eine Thiol-, Sulfid- oder Disulfidgruppe an $A_{hp}$ und/oder $B_{hb}$ gebunden vorliegt, handelt. Bei Verwendung von amphiphilen Silanen werden Nanopartikel erhalten, die sich besonders gut redispergieren lassen, sowohl in polaren als auch in unpolaren Lösungmitteln.

Die amphiphilen Silane enthalten eine Kopfgruppe $(R)_3Si$, wobei die Reste R gleich oder verschieden sein können und hydrolytisch abspaltbare Reste darstellen. Vorzugsweise sind die Reste R gleich.

Geeignete hydrolytisch abspaltbare Reste sind beispielsweise Alkoxygruppen mit 1 bis 10 C-Atomen, vorzugsweise mit 1 bis 6 C-Atomen, Halogene, Wasserstoff, Acyloxygruppen mit 2 bis 10 C-Atomen und insbesondere mit 2 bis 6 C-Atomen oder $NR'_2$-Gruppen, wobei die Reste R' gleich oder verschieden sein können und ausgewählt sind aus Wasserstoff oder Alkyl mit 1 bis 10 C-Atomen, insbesondere mit 1 bis 6 C-Atomen. Geeignete Alkoxygruppen sind beispielsweise Methoxy-, Ethoxy-, Propoxy- oder Butoxygruppen. Geeignete Halogene sind insbesondere Br und Cl. Beispiele für Acyloxygruppen sind Acetoxy oder Propoxygruppen. Weiterhin eignen sich auch Oxime als hydrolytisch abspaltbare Reste. Die Oxime können hierbei mit Wasserstoff oder beliebigen organischen Resten substituiert sein. Vorzugsweise handelt es sich bei den Resten R um Alkoxygruppen und insbesondere um Methoxy- oder Ethoxygruppen.

An die oben genannte Kopfgruppe ist ein Spacer $S_P$ kovalent gebunden, der als Bindeglied zwischen der Si-Kopfgruppe und dem hydrophilen Block $A_{hp}$ fungiert und im Rahmen der vorliegenden Erfindung eine Brückenfunktion wahrnimmt. Die Gruppe $S_P$ ist entweder -O- oder geradkettiges oder verzweigtes Alkyl mit 1-18 C-Atomen, geradkettiges oder verzweigtes Alkenyl mit 2-18 C-Atomen und einer oder mehreren Doppelbindungen, geradkettiges oder verzweigtes Alkinyl mit 2-18 C-Atomen und einer oder mehreren Dreifachbindungen, gesättigtes, teilweise oder vollständig ungesättigtes Cycloalkyl mit 3-7 C-Atomen, das mit Alkylgruppen mit 1-6 C-Atomen substituiert sein kann.

Die $C_1$-$C_{18}$-Alkylgruppe von $S_P$ ist beispielsweise eine Methyl-, Ethyl-, Isopropyl-, Propyl-, Butyl-, sek.-Butyl- oder tert.-Butyl-, ferner auch Pentyl-, 1-, 2- oder 3-Methylbutyl-, 1,1-, 1,2- oder 2,2-Dimethylpropyl-, 1-Ethylpropyl-, Hexyl-, Heptyl-, Octyl-, Nonyl-, Decyl-, Undecyl-, Dodecyl-, Tridecyl- oder Tetradecylgruppe. Gegebenenfalls kann sie perfluoriert sein, beispielsweise als Difluormethyl-, Tetrafluorethyl-, Hexafluorpropyl- oder Octafluorbutylgruppe.

Ein geradkettiges oder verzweigtes Alkenyl mit 2 bis 18 C-Atomen, wobei auch mehrere Doppelbindungen vorhanden sein können, ist beispielsweise Vinyl, Allyl, 2- oder 3-Butenyl, Isobutenyl, sek.-Butenyl, ferner 4-Pentenyl, iso-Pentenyl, Hexenyl, Heptenyl, Octenyl, $-C_9H_{16}$, $-C_{10}H_{18}$ bis $-C_{18}H_{34}$, vorzugsweise Allyl, 2- oder 3-Butenyl, Isobutenyl, sek.-Butenyl, ferner bevorzugt ist 4-Pentenyl, iso-Pentenyl oder Hexenyl.

Ein geradkettiges oder verzweigtes Alkinyl mit 2 bis 18 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, $-C_9H_{14}$, $-C_{10}H_{16}$ bis $-C_{18}H_{32}$, vorzugsweise Ethinyl, 1- oder 2-Propinyl, 2- oder 3-Butinyl, 4-Pentinyl, 3-Pentinyl oder Hexinyl.

Unsubstituierte gesättigte oder teilweise oder vollständig ungesättigte Cycloalkylgruppen mit 3-7 C-Atomen können Cyclopropyl-, Cyclobutyl-, Cyclopentyl-, Cyclohexyl-, Cycloheptyl-, Cyclopentenyl-, Cyclopenta-1,3-dienyl-, Cyclohexenyl-, Cyclohexa-1,3-dienyl-, Cyclohexa-1,4-dienyl-, Phenyl-, Cycloheptenyl-, Cyclohepta-1,3-dienyl-, Cyclohepta-1,4-dienyloder Cyclohepta-1,5-dienylgruppen sein, welche mit $C_1$- bis $C_6$-Alkylgruppen substituiert.

An die Spacergruppe $S_P$ schließt sich der hydrophile Block $A_{hp}$ an. Dieser kann ausgewählt sein aus nicht-ionischen, kationischen, anionischen oder zwitterionischen hydrophilen Polymeren, Oligomeren oder Gruppen. In der einfachsten Ausführungsform handelt es sich bei dem hydrophilen Block um Ammonium-, Sulfonium-, Phosphoniumgruppen, Alkylketten mit Carboxyl-, Sulfat- und Phosphat-Seitengruppen, wobei diese auch als entsprechendes Salz vorliegen können, teilveresterte Anhydride mit freier Säure- oder Salzgruppe, OH-substituierte Alkyl- oder Cycloalkylketten (z.B. Zucker) mit mindestens einer OH-Gruppe, NH-und SH-substituierte Alkyloder Cycloalkylketten oder Mono-, di-tri- oder oligo-Ethylenglycolgruppen.

Die Länge der entsprechenden Alkylketten kann 1 bis 20 C-Atome, vorzugsweise 1 bis 6 C-Atome betragen.

Die nicht-ionischen, kationischen, anionischen oder zwitterionischen hydrophilen Polymere, Oligomere oder Gruppen sind dabei aus entsprechenden Monomeren durch Polymerisation nach dem für den Fachmann allgemein bekannten Methoden herstellbar. Geeignete hydrophile Monomere enthalten dabei mindestens eine dispergierende funktionelle Gruppe, die aus der Gruppe bestehend aus

(i) funktionellen Gruppen, die durch Neutralisationsmittel in Anionen überführt werden können, und anionischen Gruppen, und/oder
(ii) funktionellen Gruppen, die durch Neutralisationsmittel und/oder Quarternisierungsmittel in Kationen überführt werden können, und kationischen Gruppen, und/oder
(iii) nichtionischen hydrophilen Gruppen.

Vorzugsweise werden die funktionellen Gruppen (i) aus der Gruppe, bestehend aus Carbonsäure-, Sulfonsäure- and Phosphonsäuregruppen, sauren Schwefelsäure- and Phosphorsäureestergruppen sowie Carboxylat-, Sulfonat-, Phosphonat-, Sulfatester- und Phosphatestergruppen, die funktionellen Gruppen (ii) aus der Gruppe, bestehend aus primären, sekundären and tertiären Aminogruppen, primären, sekundären, tertiären and quaternären Ammoniumgruppen, quaternären Phosphoniumgruppen and tertiären Sulfoniumgruppen, und die funktionellen Gruppen (iii) aus der Gruppe, bestehend aus omega-Hydroxy- and omega-Alkoxy-poly(alkylenoxid)-1-yl-Gruppen, ausgewählt.

Sofern nicht neutralisiert, können die primären und sekundären Aminogruppen auch als isocyanatreaktive funktionelle Gruppen dienen.

Beispiele gut geeigneter hydrophiler Monomere mit funktionellen Gruppen (i) sind Acrylsäure, Methacrylsäure, beta-Carboxyethylacrylat, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester, insbesondere Acrylsäure und Methacrylsäure.

Beispiele gut geeigneter hydrophiler Monomere mit funktionellen Gruppen (ii) sind 2-Aminoethylacrylat und -methacrylat oder Allylamin.

Beispiele gut geeigneter hydrophiler Monomere mit funktionellen Gruppen (iii) sind omega-Hydroxy- oder omega-Methoxy-polyethylenoxid-1-yl-, omega-Methoxy-polypropylenoxid-1-yl-, oder omega-Methoxy-poly(ethylenoxid-co-polypropylenoxid)-1-yl-acrylat oder - methacrylat, sowie Hydroxy-subsitituerte Ethylene, Acrylate oder Methacrylate, wie beispielsweise Hydroxyethylmethacrylat.

Beispiele geeigneter Monomere für die Bildung zwitterionischer hydrophiler Polymere sind jene bei denen in der Seitenkette eine Betainstruktur auftritt. Vorzugsweise ist die Seitengruppe ausgewählt aus $-(CH_2)_m-(N^+(CH_3)_2)-(CH_2)_n-SO_3^-$, $-(CH_2)_m-(N^+(CH_3)_2)-(CH_2)_n-PO_3^{2-}$, $-(CH_2)_m-(N^+(CH_3)_2)-(CH_2)_n-O-PO_3^{2-}$ oder $-(CH_2)_m-(P^+(CH_3)_2)-(CH_2)_n-SO_3^-$, wobei m steht für eine ganze Zahl aus dem Bereich von 1 bis 30, vorzugsweise aus dem Bereich 1 bis 6, insbesondere bevorzugt 2, und n steht für eine ganze Zahl aus dem Bereich von 1 bis 30, vorzugsweise aus dem Bereich 1 bis 8, insbesondere bevorzugt 3.

Insbesondere bevorzugt kann es dabei sein, wenn mindestens eine Struktureinheit des hydrophilen Blocks einen Phosphonium- oder Sulfonium-Rest aufweist.

Bei der Auswahl der hydrophilen Monomere ist darauf zu achten, dass vorzugsweise die hydrophilen Monomere mit funktionellen Gruppen (i) und die hydrophilen Monomere mit funktionellen Gruppen (ii) so miteinander kombiniert werden, dass keine unlöslichen Salze oder Komplexe gebildet werden. Dagegen können die hydrophilen Monomere mit funktionellen Gruppen (i) oder mit funktionellen Gruppen (ii) mit den hydrophilen Monomeren mit funktionellen Gruppen (iii) beliebig kombiniert werden.

Von den vorstehend beschriebenen hydrophilen Monomeren werden die Monomeren mit den funktionellen Gruppen (i) besonders bevorzugt verwendet.

Vorzugsweise werden dabei die Neutralisationsmittel für die in Anionen umwandelbaren funktionellen Gruppen (i) aus der Gruppe, bestehend aus Ammoniak, Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin, Triethanolamin, Diethylentriamin und Triethylentetramin, und die Neutralisationsmittel für die in Kationen umwandelbaren funktionellen Gruppen (ii) ausgewählt aus der Gruppe, bestehend aus Schwefelsäure, Salzsäure, Phosphorsäure, Ameisensäure, Essigsäure, Milchsäure, Dimethylolpropionsäure and Zitronensäure ausgewählt.

Ganz besonders bevorzugt ist der hydrophile Block ausgewählt aus monodi- und triethylenglycol Struktureinheiten.

An den hydrophilen Block $A_{hp}$ angebunden folgt der hydrophobe Block $B_{hb}$. Der Block $B_{hb}$ basiert auf hydrophoben Gruppen oder, wie der hydrophile Block, auf der Polymerisation geeigneter hydrophober Monomere.

Beispiele geeigneter hydrophober Gruppen sind geradkettiges oder verzweigtes Alkyl mit 1-18 C-Atomen, geradkettiges oder verzweigtes Alkenyl mit 2-18 C-Atomen und einer oder mehreren Doppelbindungen, geradkettiges oder verzweigtes Alkinyl mit 2-18 C-Atomen und einer oder mehreren Dreifachbindungen, gesättigtes, teilweise oder vollständig ungesättigtes Cycloalkyl mit 3-7 C-Atomen, das mit Alkylgruppen mit 1-6 C-Atomen substituiert sein kann. Beispiele solcher Gruppen sind bereits vorab genannt. Darüber hinaus eignen sich Aryl, Polyaryl, Aryl-$C_1$-$C_6$-alkyl oder Ester mit mehr als 2 C-Atomen. Die genannten Gruppen können darüber hinaus auch substituiert sein, insbesondere mit Halogenen, wobei sich perfluorierte Gruppen besonders eignen.

Aryl-$C_1$-$C_6$-alkyl bedeutet beispielsweise Benzyl, Phenylethyl, Phenylpropyl, Phenylbutyl, Phenylpentyl oder Phenylhexyl, wobei sowohl der Phenylring als auch die Alkylenkette, wie zuvor beschrieben teilweise oder vollständig mit F substituiert sein können, besonders bevorzugt Benzyl oder Phenylpropyl.

Beispiele geeigneter hydrophober olefinisch ungesättigter Monomere für den hydrophoben Block $B_{hp}$ sind

(1) im wesentlichen säuregruppenfreie Ester olefinisch ungesättigter Säuren, wie (Meth)Acrylsäure-, Crotonsäure-, Ethacrylsäure-, Vinylphosphonsäure- oder Vinylsulfonsäurealkyl- oder - cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat, -ethacrylat oder -vinyiphosphonat oder vinylsulfonat; cycloaliphatische (Meth)acrylsäure-, Crotonsäure-, Ethacrylsäure-, Vinylphosphonsäure- oder Vinylsulfonsäureester, insbesondere Cyclohexyl-, Isobornyl-, Dicyclopentadienyl-, Octahydro-4,7-methano-1H-inden-methanol- oder tert.-Butylcyclohexyl(meth)acrylat, - crotonat, -ethacrylat, vinylphosphonat oder vinylsulfonat. Diese können in untergeordneten Mengen höherfunktionelle (Meth)Acrylsäure-, Crotonsäure- oder Ethacrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1 H-inden-dimethanol- oder Cyclohexan-1,2-, -1,3- oder -1,4-dioldi(meth)acrylat, Trimethylolpropantri(meth)acrylat oder Pentaerythrittetra(meth)acrylat sowie die analogen Ethacrylate oder Crotonate enthalten. Im Rahmen der vorliegenden Erfindung sind hierbei unter untergeordneten Mengen an höherfunktionellen Monomeren (1) solche Mengen zu verstehen, welche nicht zur Vernetzung oder Gelierung der Polymerisate führen;

(2) Monomere, die mindestens eine Hydroxylgruppe oder Hydroxymethylaminogruppe pro Molekül tragen und im wesentlichen säuregruppenfrei sind, wie

- Hydroxyalkylester von alpha,beta-olefinisch ungesättigten Carbonsäuren, wie Hydroxyalkylester der Acrylsäure, Methacrylsäure and Ethacrylsäure, in denen die Hydroxyalkylgruppe bis zu 20 Kohlenstoffatome enthält, wie 2-Hydroxyethyl-, 2-HydroxyPropyl-, 3-Hydroxypropyl-, 3-Hydroxybutyl-, 4-Hydroxybutylacrylat, -methacrylat oder - ethacrylat; 1,4-Bis(hydroxymethyl)cyclohexan-, Octahydro-4,7-methano-1 H-inden-dimethanol- oder Methylpropandiolmonoacrylat, -monomethacrylat, monoethacrylat oder -monocrotonat; oder Umsetzungsprodukte aus cyclischen Estern, wie z.B. epsilon-Caprolacton und diesen Hydroxyalkylestern;

- olefinisch ungesättigte Alkohole wie Allylalkohol

- Allylether von Polyolen wie Trimethylolpropanmonoallylether oder Pentaerythritmono-, -di- oder -triallylether. Die höherfunktionellen Monomere werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Polymerisate führen,

- Umsetzungsprodukte von alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidylester einer Carbonsäure mit einem tertiären alpha-Kohlenstoffatom kann vorher, wahrend oder nach der Polymerisationsreaktion erfolgen. Bevorzugt wird als Monomer (2) das Umsetzungsprodukt von Acryl- und/oder Methacrylsaure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, .1998, Seiten 605 und 606, verwiesen;

- Formaldehydaddukte von Aminoalkylestern von alpha,beta-olefinisch ungesättigten Carbonsäuren und von

alpha,beta-ungesättigten Carbonsäureamiden, wie N-Methylol- und N,NDimethylol-aminoethylacrylat, -aminoethylmethacrylat, -acrylamid und -methacrylamid; sowie

- Acryloxysilangruppen und Hydroxylgruppen enthaltende olefinisch ungesättigte Monomere, herstellbar durch Umsetzung hydroxyfunktioneller Silane mit Epichlorhydrin 30 und anschließender Umsetzung des Zwischenprodukts mit einer alpha,beta-olefinisch ungesättigten Carbonsäure, insbesondere Acrylsäure and Methacrylsäure, oder ihren Hydroxyalkylestern;

(3) Vinylester von in alpha-Stellung verzweigten Monocarbonsäuren mit 5 bis 18 Kohlenstoffatomen im Molekül, wie die Vinylester der Versatic ®-Säure, die unter der Marke VeoVa ® vertrieben werden;

(4) cyclische und/oder acyclische Olefine, wie Ethylen, Propylen, But-1-en, Pent-1-en, Hex-1-en, Cyclohexen, Cyclopenten, Norbonen; Butadien, Isopren, Cylopentadien und/oder Dicyclopentadien;

(5) Amide von alpha,beta-olefinisch ungesättigten Carbonsäuren, wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl- und/oder N, N-Cyclohexylmethyl-(meth)acrylsäureamid;

(6) Epoxidgruppen enthaltenden Monomere, wie der Glycidylester der Acrylsäure, Methacrylsäure, Ethacrylsäure, Crotonsäure, Maleinsäure, Fumarsäure und/oder Itaconsäure;

(7) vinylaromatische Kohlenwasserstoffe, wie Styrol, Vinyltoluol oder alpha-Alkylstyrole, insbesondere alpha-Methylstyrol;

(8) Nitrile, wie Acrylnitril oder Methacrylnitril;

(9) Vinylverbindungen, ausgewählt aus der Gruppe, bestehend aus Vinylhalogeniden wie Vinylchlorid, Vinylfluorid, Vinylidendichlorid, Vinylidendifluorid; Vinylamiden, wie N-Vinylpyrrolidon; Vinylethern wie Ethylvinylether, n-Propylvinylether, Isopropylvinylether, n-Butylvinylether, Isobutylvinylether und Vinylcyclohexylether; sowie Vinylestern wie Vinylacetat, Vinyipropionat, und Vinylbutyrat;

(10) Allylverbindungen, ausgewählt aus der Gruppe, bestehend aus Allylethern und -estern, wie Propylallylether, Butylallylether, Ethylenglykoldiallylether, Trimethylolpropantriallylether oder Allylacetat oder Allylpropionat; was die höherfunktionellen Monomere betrifft, gilt das vorstehend Gesagte sinngemäß;

(11) Siloxan oder Polysiloxanmonomere, die mit gesättigten, ungesättigten, geradkettigen oder verzweigten Alkylgruppen oder anderen bereits vorab genannten hydrophoben Gruppen substituiert sein können. Darüber hinaus eignen sich Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen, wie Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind; und

(12) Carbamat- oder Allophanatgruppen enthaltende Monomere, wie Acryloyloxy- oder Methacryloyloxyethyl-, propyl- oder butylcarbamat oder - allophanat; weitere Beispiele geeigneter Monomere, welche Carbamatgruppen enthalten, werden in den Patentschriften US 3,479,328 A 1, US 3,674,838 A 1, US 4,126,747 A 1, US 4,279,833 A 1 oder US 4,340,497 A 1 beschrieben.

Die Polymerisation der oben genannten Monomere kann auf allen dem Fachmann bekannten Arten erfolgen, z.B. durch Polyadditionen oder kationische, anionische oder radikalische Polymerisationen. Polyadditionen sind in diesem Zusammenhang bevorzugt, weil damit auf einfache Weise unterschiedliche Monomer-typen miteinander kombiniert werden können, wie beispielsweise Epoxide mit Dicarbonsäuren oder Isocyanate mit Diolen.
Die jeweiligen hydrophilen und hydrophoben Blöcke können grundsätzlich in beliebiger Weise miteinander

kombiniert werden. Vorzugsweise weisen die amphiphilen Silane gemäß der vorliegenden Erfindung einen HLB-Wert im Bereich von 2-19, vorzugsweise im Bereich von 4-15 auf. Der HLB-Wert ist dabei definiert als

$$HLB = \frac{Masse\ polare\ Anteile}{Molmasse} \bullet 20$$

und gibt an ob sich das Silan eher hydrophil oder hydrophob verhält, d.h. welcher der beiden Blöcke $A_{hp}$ und $B_{hb}$ die Eigenschaften des erfindungsgemäßen Silans dominiert. Der HLB-Wert wird theoretisch berechnet, und ergibt sich aus den Massenanteilen hydrophiler und hydrophober Gruppen. Ein HLB-Wert von 0 spricht für ein lipophile Verbindung, eine chemische Verbindung mir einem HLB-Wert von 20 hat nur hydrophile Anteile.

Die geeigneten amphiphilen Silane zeichnen sich weiterhin dadurch aus, dass mindestens eine Thiol-, Sulfid- oder Disulfidgruppe an $A_{hp}$ und/oder $B_{hb}$ gebunden vorliegt. Vorzugsweise liegt die reaktive funktionelle Gruppe am hydrophoben Block $B_{hb}$ und dort insbesondere bevorzugt am Ende des hydrophoben Blocks gebunden vor. In der bevorzugten Ausführungsform weisen die Kopfgruppe $(R)_3Si$ und die Thiol-, Sulfid- oder Disulfidgruppe den größtmöglichen Abstand auf. Dies ermöglicht eine besonders flexible Gestaltung der Kettenlängen der Blöcke $A_{hp}$ und $B_{hb}$, ohne die mögliche Reaktivität der Thiol-, Sulfid- oder Disulfidgruppe, beispielsweise mit dem Umgebungsmedium, wesentlich einzuschränken.

Zusätzlich können neben der Thiol-, Sulfid-, Polysulfid- oder Disulfidgruppe weitere reaktive funktionelle Gruppe vorliegen, insbesondere ausgewählt aus Silylgruppen mit hydrolytisch abspaltbaren Resten, OH-, Carboxy-, NH-, SH-Gruppen, Halogenen oder Doppelbindungen enthaltenden reaktiven Gruppen, wie beispielsweise Acrylat- oder Vinylgruppen. Geeignete Silylgruppen mit hydrolytisch abspaltbaren Resten sind bereits vorab bei der Beschreibung der Kopfgruppe $(R)_3Si$ beschrieben. Vorzugsweise handelt es sich bei der zusätzlichen reaktiven Gruppe um eine OH-Gruppe.

Die auf diese Weise modifizierten Nanopartikel werden dann in einem zweiten Schritt in Gegenwart organischer Monomere im Zuge einer radikalischen Polymerisation umgesetzt, wobei das im ersten Schritt aufgebrachte Oberflächenmodifizierungsmittel als Radikalkettenüberträger fungiert. Eine radikalisch wachsende Polymerkette kann z.B. den Wasserstoff einer SH-Gruppe abstrahieren und erzeugt damit ein neues Radikal am Schwefel, das in der Lage ist, eine neue Polymerkette zu starten.

Das Verfahren zur Herstellung der erfindungsgemäßen Nanopartikel lässt sich demzufolge exemplarisch wie folgt zusammenfassen:

(3-Mercaptopropyl)-trimethoxysilan funktionalisiertes Kieselsol

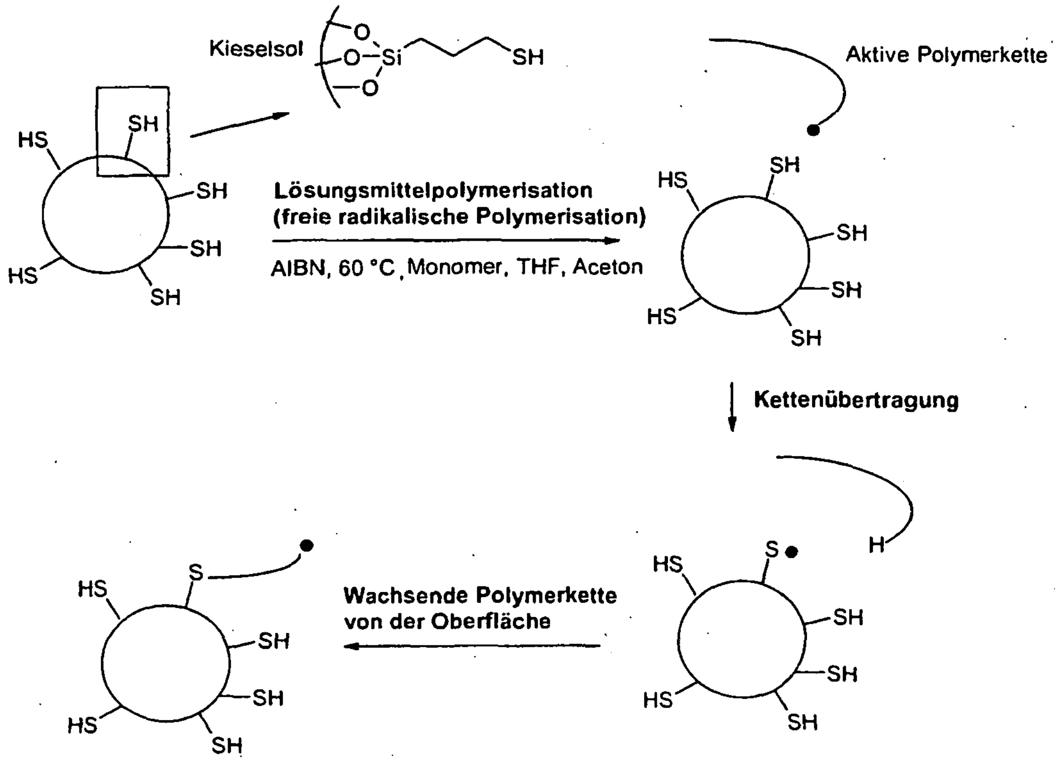


Generell eignen sich alle Monomere, die unter dem Fachmann bekannten Bedingungen der radikalischen Polymerisation mit dem aufgebrachten Oberflächenmodifizierungsmittei reagieren können. Hierzu eignen sich gängige organische Monomere wie beispielsweise Acrylate, Methacrylate, Vinylmonomere oder Styrolderivate. Besonders bevorzugt sind Methacrylsäureester, wie beispielsweise Laurylmethacrylat, n-Butylmethacrylat und Methylmethacrylat sowie Styrol.

Insbesondere eignen sich auch organische Monomere mit funktionellen Gruppen, wobei die funktionellen Gruppen zum Beispiel ausgewählt sein können aus der Gruppe der OH-, NH-, COOH-, Alkoxysilyl- oder Epoxygruppen. Insbesondere handelt es sich bei der funktionellen Gruppe um eine OH-Gruppe. Insgesamt handelt es sich um Monomer-Gemische mit und ohne OH-Gruppen.

Beispiele gut geeigneter Monomere mit funktionellen Gruppen sind Acrylsäure, Methacrylsäure, beta-Carboxyethylacrylat, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester, insbesondere Acrylsäure und Methacrylsäure. Weitere Beispiele gut geeigneter Monomere mit funktionellen Gruppen sind 2-Aminoethylacrylat und -methacrylat oder Allylamin.

Weitere geeignete Monomere mit funktionellen Gruppen sind omega-Hydroxy- oder omega-Methoxy-polyethylenoxid-1-yl-, omega-Methoxypolypropylenoxid-1-yl-, oder omega-Methoxy-poly(ethylenoxid-copolypropylenoxid)-1-yl-acrylat oder-methacrylat, sowie Hydroxy-subsitituerte Ethylene, Acrylate oder Methacrylate, wie beispielsweise Hydroxyethylmethacrylat oder Hydroxypropylmethacrylat.

Beispiele geeigneter Monomere für die Bildung zwitterionischer hydrophiler Polymere sind jene bei denen in der Seitenkette eine Betainstruktur auftritt. Vorzugsweise ist die Seitengruppe ausgewählt aus $-(CH_2)_m-(N^+(CH_3)_2)-(CH_2)_n-SO_3^-$, $-(CH_2)_m-(N^+(CH_3)_2)-(CH_2)_n-PO_3^{2-}$, $-(CH_2)_m-(N^+(CH_3)_2)-(CH_2)_n-O-PO_3^{2-}$ oder $-(CH_2)_m-(P^+(CH_3)_2)-CH_2)_n-SO_3^-$, wobei m steht für eine ganze Zahl aus dem Bereich von 1 bis 30, vorzugsweise aus dem Bereich 1 bis 6, insbesondere bevorzugt 2, und n steht für eine ganze Zahl aus dem Bereich von 1 bis 30, vorzugsweise aus dem Bereich 1 bis 8, insbesondere bevorzugt 3.

Zum Start der radikalischen Polymerisation eignen sich grundsätzlich alle dem Fachmann bekannten Arten. Bevorzugt wird die radikalische Polymerisation in für den Fachmann bekannter Weise mit AIBN oder AIBNderivaten initiiert.

Für die Durchführung der Polymerisation eignen sich ebenfalls alle dem Fachmann bekannten Prozessarten.

So kann beispielsweise die Zugabe der Monomere und des Radikalstarters in einem Schritt erfolgen, dies ist die bevorzugte Ausführungsform. Weiterhin ist es auch möglich, dass die Zugabe der Monomere und der Radikalstarter stufenweise erfolgt, z.B. mit Nachinitiierung und portionsweiser Zugabe der Monomere. Weiterhin ist es auch möglich, die Monomerzusammensetzung im Verlauf der Polymerisation schrittweise zu verändern, z.B. durch zeitlich gesteuerte Zugabe zuerst hydrophiler, dann hydrophober Monomere oder umgekehrt. Dies ist insbesondere bei Verwendung eines dem Fachmann bekannten kontrollierten radikalischen Polymerisationsverfahrens möglich.

Werden Lösungsmittelgemisch und Monomere so gewählt, das zwar die Monomere, die daraus gebildeten Polymere ab einer bestimmten Kettenlänge jedoch nicht mehr löslich sind, fallen die Partikel aus der Reaktionsmischung aus. Dadurch kann die Dicke der gebildeten Polymerhülle kontrolliert werden. Die Polymerhülle schützt die Teilchen gleichzeitig wirkungsvoll vor irreversiblem Zusammenwachsen.

Die ausgefallenen modifizierten Partikel können vom in dem Reaktionsmedium befindlichen freien Polymer oder von nicht umgesetzten Oberflächenmodifizierungsmittel abgetrennt werden. Dies kann nach gängigen dem Fachmann bekannten Methoden erfolgen. In einer bevorzugten Ausführungsform wird die Polymerisation in einem Lösungsmittel oder Lösungsmittelgemisch durchgeführt, in dem die Monomere löslich sind, die gebildeten Polymere ab einer bestimmten Kettenlänge jedoch nicht. Dadurch fallen die funktionalisierten Partikel aus der Reaktionslösung aus. Ein Polymerwachstum auf der Oberfläche der ausgefallenen Teilchen ist kaum möglich, so dass Restmonomere und eventuell bei der Herstellung der Partikel oder deren Funktionalisierung nicht umgesetzte, noch in Lösung befindliche Reagenzien oder gelöste Nebenprodukte einfach, zum Beispiel durch Filtration, abtrennbar sind. Die ausgefallenen Partikel sind in einem geeigneten Lösungsmittel entsprechend der auf ihnen gebildeten Polymerhülle redispergierbar.

Die erfindungsgemäßen Partikel können aber auch als Mischung mit freien Polymeren direkt eingesetzt werden. Hierdurch kann die Dispergierbarkeit der Partikel verbessert werden.

Die auf diese Weise gewonnenen oberflächenmodifizierten Nanopartikel lassen sich auf einfache Weise in einem neuen Medium dispergieren. Im einfachsten Fall werden die Nanopartikel mit dem Dispergiermittel gemischt.

Als Ergebnis der vorliegenden Erfindung werden vorzugsweise singuläre Partikel erhalten, deren Oberfläche mit Oberflächenmodifizierungsmitteln und Polymeren modifiziert sind. Die genannten Partikel können also als Kern-Hülle-Partikel bezeichnet werden, bei denen der Kern, das originäre Nanopartikel, durch eine Hülle aus Oberflächenmodifizierungsmittel und Polymer umhüllt ist. Der Anteil des Kerns am gesamten Partikel beträgt üblicherweise 10-80 Gew.-%, vorzugsweise 20-70 Gew.-%, insbesondere 35-65 Gew.-% und ganz besonders bevorzugt 40-55 Gew.-%. Die Bestimmung der Anteile erfolgt dabei über Thermogravimetrie-Analyse (TGA). Hierbei wird der Glührückstand ($SiO_2$-Anteil) der getrockneten Kem-Hülle-Partikel bestimmt (Gerät: TGA V4.OD Dupont 2000), Aufheizrate: 10 K/min, Temperaturbereich 25-1000 °C in Luft, Platintiegel).

Die Verwendung der erfindungsgemäßen Nanopartikel in Formulierungen, Lacken, Farben und Kunststoffen oder in deren Vorstufen ist ebenfalls Gegenstand der vorliegenden Erfindung. Dabei werden die erfindungsgemäßen Partikel vorzugsweise als Additiv in den genannten Systemen eingesetzt. Dabei werden die erfindungsgemäßen Partikel in für den Fachmann bekannten üblichen Mengen den jeweiligen Anwendungssystemen zugesetzt. Dies kann bei der Herstellung der Formulierung, des Lacks oder der Farbe direkt erfolgen oder durch Einarbeitung der Partikel in bereits bestehende Systeme. Vorzugsweise handelt es sich bei den genannten Systemen um transparente Systeme.

Formulierungen, Lacke, Farben, Kunststoffe enthaltend redispergierbare Nanopartikel gemäß der vorliegenden Erfindung sind ebenfalls Gegenstand der vorliegenden Erfindung.

In den genannten Anwendungen kann beispielsweise die Verbesserung der Kratzfestigkeit und Chemikalienbeständigkeit von Klarlacken (z.B. bei handelsüblichen Pulverlacken, UV-härtenden Lacken, Dual Cure Lacken) und Kunststoffen, wie z.B. Polycarbonat oder PMMA erreicht werden. Andere Anwendungen beziehen sich beispielsweise auf den transparenten UV-Schutz oder die transparente Kolorierung von Lacken und Kunststoffen mit funktionellen Nanoteilchen. Weiterhin können die erfindungsgemäßen Partikel zur Modifikation von Thermoplasten, Kleb- und Dichtstoffen, sowie Schäumen zur Verbesserung der mechanischen, chemischen und/oder thermischen Eigenschaften eingesetzt werden.

Weiterhin können die erfindungsgemäßen Partikel als Streuzentren für kurzwellige Strahlung (UV) in für das Auge transparenten Anwendungen eingesetzt werden. Nach der Rayleigh Formel nimmt das an Nanopartikeln gestreute Licht mit sinkender Wellenlänge in der 4. Potenz zu. Damit ist es möglich, Nanoteilchen einer Größe und Brechwert einzusetzen, die im sichtbaren Licht gerade noch keine oder sehr geringe Lichtstreuung aufweisen, aber im kurzwelligeren Bereich im UV A-C zunehmend Licht streuen. Da die Witterungsstabilität einer Schicht unter anderem von der Gesamtbelastung mit UV-Licht abhängt, wird damit die Witterungsstabilität verbessert und es können UV-Absorber eingespart werden.

Weiterhin können die Polymere an der Teilchenoberfläche so gewählt werden, dass die Partikel während des Verdampfens der Lösemittel an die Grenzfläche des Lackes wandern und somit einen Gradienten mit vorteilhaften mechanischen Eigenschaften ausbilden. Die erfindungsgemäßen polymerbeschichteten Nanopartikel können auch Silikon-, langkettige Alkyl- und/oder Fluoralkylgruppen in der Seitenkette tragen. Damit werden gezielte Inkompatibilitäten mit Lösungsmitteln und anderen Bindemittelkomponenten geschaffen die bewirken, dass sich die Nanopartikel eher an

der Grenzfläche zur Luft anreichern. Die Folge ist ein Gradient in der Nanoteilchenkonzentration von der Luft zur Substratseite hin. Dadurch kann man an der Oberseite der Beschichtung eine erhöhte mechanische Beständigkeit erzielen, ohne das Gesamtvolumen der Beschichtung mit Nanoteilchen füllen zu müssen. Dies hat wirtschaftliche Vorteile und vermeidet Probleme wie Sprödigkeit oder schlechte Haftung. Darüber hinaus ist es möglich, die vorab genannten Effekte in bevorzugter Weise zu kombinieren. Es resultieren aufschwimmende Teilchen, die eine lichtstreuende Wirkung im kurzwelligen Bereich ausüben und ggf. zusätzlich UV-Absorber in der Polymerseitenkette aufweisen. Damit wird der UV-Schutz dahin transportiert, wo er am wirkungsvollsten ist: Dicht an die Oberfläche, verbunden mit einer gleichzeitigen mechanischen Stabilisierung. Der Vorteil dieser Lösung besteht darin, dass man Stoffe, die hauptsächlich an der Oberfläche der Beschichtung gebraucht werden, durch das Vehikel der Nanoteilchen dorthin transportieren und fixieren kann. Am Beispiel der UV-Absorber und HALS würde man polymerisierbare Absorber und HALS Derivate, wie z.B. Benzophenon-acrylat in die Polymerseitenkette einpolymerisieren und gleichzeitig Silikon-, langkettige Alkyl und/oder Fluoralkylreste verwenden. Durch die dadurch geschaffenen Inkompatibilitäten reichern sich die Nanoteilchen an der Oberfläche der Beschichtung an und werden dort durch Vernetzung fixiert. Der UV-Absorber ist dann in einer hohen Konzentration an der Oberseite der Beschichtung präsent und kann effektiv tiefere Lackschichten schützen. Während bei homogen verteilten UV-Absorbern gleicher Konzentration die UV-Strahlen viel tiefer in das Material eindringen und schädigen können, bevor sie auf ein Absorbermolekül treffen, wird die Strahlung von an der Oberfläche präsenten Absorbern effektiv gefiltert.

In herkömmlichen Lacken kann man aber die UV-Absorber nicht an der Oberfläche konzentrieren, ohne die mechanischen Eigenschaften der Lacke massiv zu beeinträchtigen. UV-Absorber mit Silicon- oder Fluoralkylseitenketten sind prinzipiell zugänglich, hätten aber eine ausgeprägte Weichmacherwirkung, die die Kratzfestigkeit massiv herabsetzt. Nur durch die Kombination von Härte-erhöhenden Nanoteilchen und UV-Absorbern ist es möglich, eine signifikante Absorberkonzentration an die Schichtoberfläche zu bringen, ohne die mechanischen Schichteigenschaften zu beeinträchtigen.

Die nachfolgenden Beispiele illustrieren die Erfindung lediglich, ohne den Schutzbereich zu beschränken. Insbesondere sind die darin beschriebenen Merkmale, Eigenschaften und Vorteile der dem betreffenden Beispiel zugrunde liegenden definierten Verbindung(en) auch auf andere, nicht im Detail aufgeführte, aber unter den Schutzbereich der Ansprüche fallende Stoffe und Verbindungen anwendbar, sofern an anderer Stelle nichts Gegenteiliges gesagt wird.

**Beispiele:**

*Beispiel 1:*

800 g einer 25%-igen wässrigen Kieselsol-Lösung (Levasil 300/30, Fa. H.C. Starck. Teilchengröße: 8 nm) werden mit 3200 g Isopropanol auf 5 Gew.-% verdünnt. Es werden 9,78 g 3-Mercaptopropyl-trimethoxysilan direkt hinzugegeben und 18 h bei Raumtemperatur gerührt.

Anschließend werden 16 g Azobisisobutyronitril (AIBN) und eine Acrylat/Methacrylat-Mischung bestehend aus 155 ml Methylmethacrylat (MMA), 210 ml n-Butylacrylat (nBA) und 39 ml Hydroxyethylmethacrylat (HEMA) hinzu gegeben.

Die einphasige Reaktionslösung wird 10 min mit Argon gespült und bei 70 °C für 8 h erhitzt. Nach der Reaktionszeit werden die flüchtigen Bestandteile am Rotationsverdampfer entfernt. Es bleibt eine klebrige farblose Paste zurück, die dann im gewünschten Verhältnis mit Butylacetat gelöst wird.

Das $SiO_2$-Polymer-Verhältnis wird mittels TGA zu 32 Gew.-% $SiO_2$/ 68 Gew.-% Polymer bestimmt (theoretisch berechnet aus den Einwaagen: 34 Gew.-% $SiO_2$/ 66 Gew.-% Polymer).

*Beispiel 2:*

270 g einer 27,8 %-igen wässrigen Kieselsol-Lösung (Levasil 300/30, Fa. H.C. Starck. Teilchengröße: 8 nm) werden mit 1230 g Isopropanol auf 5 Gew.-% verdünnt. Es werden 7,334 g 3-Mercaptopropyl-trimethoxysilan direkt hinzu gegeben und 18 h bei Raumtemperatur gerührt. Anschließend werden 6 g Azobisisobutyronitril (AIBN) und eine Acrylat/Methacrylat-Mischung bestehend aus 67,4 ml Methylmethacrylat (MMA), und 8,5 ml Hydroxyethylmethacrylat (HEMA) hinzu gegeben.

Die einphasige Reaktionslösung wird 10 min mit Argon gespült und bei 70 °C für 8 h erhitzt. Nach der Reaktionszeit werden die flüchtigen Bestandteile am Rotationsverdampfer entfernt. Es bleibt eine klebrige farblose Paste zurück, die dann im gewünschten Verhältnis mit Butylacetat gelöst wird.

Das $SiO_2$-Polymer-Verhältnis wird mittels TGA zu 51 Gew.-% $SiO_2$/ 49 Gew.-% Polymer bestimmt (theoretisch berechnet aus den Einwaagen: 51 Gew.-% $SiO_2$/ 49 Gew.-% Polymer).

*Beispiel 3:*

Zu 4,425 g Zinkacetat werden 12,5 ml Methanol zugegeben und anschließen mittels eines Ölbades und Rühren auf 53 °C erhitzt. Während des Erwärmens werden 4,84 g Kaliumtrimethylsilanoat und 12,5 ml Methanol so lange gemischt, bis sich das Silanoat gelöst hat. Diese Mischung wird dann mittels einer Spritze zu dem Zinkacetat gegeben. Nach 30 min werden dann 75,7 µl Mercaptopropyltrimethoxysilan zugegeben und kräftig gerührt. Danach werden 211,8 µl Hexadecyltrimethoxysilan zugegeben und weiterhin gerührt. 15 Minuten nach der Zugabe wird die zunächst klare Lösung trüb. Der Ansatz wird 4,5 h bei 50 °C gerührt. Die überstehende Lösung wird abdekantiert, der Rückstand wird mit 20 ml Methanol versetzt und abdekantiert. Der Rückstand wird in eine Flasche überführt und mit THF auf 32,6 g aufgefüllt, dies entspricht einer Konzentration von 5 %. 10 g der Lösung werden in ein Polymerreaktionsgefäß überführt und mit 0,4 ml Methylmethacrylat, 0,52 ml n-Butylacetat, 0,1 ml 2-Hydroxyethylmethacrylat und 40 mg AIBN versetzt. Das Gemisch wird 10 min mit Argon geflutet und dann 18 h bei etwa 55 °C im Reaktionsgefäß gerührt. Das Produkt wird in einen Rundkolben überführt und am Rotationsverdampfer auf ca. 10-20 g eingeengt. Danach werden nochmals 15 ml Butylacetat zugegeben und es wird auf ca. 4-5 g Rückstand eingeengt.

*Beispiel 4: Im Lack aufschwimmende Partikel*

Zu 10 ml einer 25%-igen wässrigen Kieselsol-Lösung (Levasil 300/30, Fa. H.C. Starck. Teilchengröße: 8 nm) werden 100 mg Azobisisobutyronitril (AIBN), 20 ml Tetrahydrofuran (THF) und 5 ml einer Acrylat/Methacrylat-Mischung bestehend aus 38 % Methylmethacrylat (MMA), 40 % n-Butylacrylat (nBA), 20 % Hydroxyethylmethacrylat (HEMA) und 2% Fluowet AC800 (Clariant, Fluoralkylacrylat) gegeben. Die einphasigen Reaktionslösungen werden 10 min mit Argon gespült und bei 60°C für 16 Stunden erhitzt. Nach der Reaktionszeit werden die flüchtigen Bestandteile am Rotationsverdampfer entfernt. Es bleibt eine klebrige farblose Paste zurück. Das modifizierte Kieselsol lässt sich in THF sowie in n-Butylacetat redispergieren.

*Beispiel 5: Im Lack aufschwimmende Partikel mit UV-Absorber*

Zu 10 ml einer 25%-igen wässrigen Kieselsol-Lösung (Levasil 300/30, Fa. H.C. Starck. Teilchengröße: 8 nm) werden 100 mg Azobisisobutyronitril (AIBN), 20 ml Tetrahydrofuran (THF) und 5 ml einer Acrylat/Methacrylat-Mischung bestehend aus 36 % Methylmethacrylat (MMA), 40 % n-Butylacrylat (nBA), 20 % Hydroxyethylmethacrylat (HEMA), 2% Fluowet AC800 (Clariant, Fluoralkylacrylat) und 2% Benzophenonacrylat (polymerisierbarer UV-Absorber) gegeben. Die einphasigen Reaktionslösungen werden 10 min mit Argon gespült und bei 60°C für 16 Stunden erhitzt. Nach der Reaktionszeit werden die flüchtigen Bestandteile am Rotationsverdampfer entfernt. Es bleibt eine klebrige farblose Paste zurück. Das modifizierte Kieselsol lässt sich in THF sowie in n-Butylacetat redispergieren.

**Patentansprüche**

1. Redispergierbare Kern-Hülle-Nanopartikel, **dadurch gekennzeichnet, dass** die Nanopartikel durch eine Hülle aus mindestens einem Oberflächenmodifizierungsmittel und einem Polymer umhüllt sind, wobei mindestens ein Oberflächenmodifizierungsmittel mindestens eine funktionelle Gruppe ausgewählt aus der Gruppe umfassend Thiole, Sulfide, Disulfide oder Polysulfide aufweist,
und wobei das Polymer durch radikalische Polymerisation in Gegenwart organischer Monomere gebildet wird, wobei das Oberflächenmodifizierungsmittel als Radikalkettenüberträger fungiert, und wobei die Nanopartikel auf Sulfaten oder Carbonaten von Erdalkaliverbindungen oder auf Oxiden bzw. Hydroxiden von Silizium, Titan, Zink, Aluminium, Cer, Cobalt, Chrom, Nickel, Eisen, Yttrium oder Zirkonium oder Mischungen hieraus basieren, die optional mit Metall-Oxiden bzw. -Hydroxiden beschichtet sein können, oder auf mit Metall-Oxiden bzw. -Hydroxiden beschichteten Metallen, wie beispielsweise Ag, Cu, Fe, Au, Pd, Pt oder Legierungen basieren,
und wobei der Anteil des Kerns am gesamten Partikel 10-80 Gew.-% beträgt.

2. Redispergierbare Nanopartikel gemäß Anspruch 1, **dadurch gekennzeichnet, dass** die Nanopartikel ausgewählt sind aus $SiO_2$-Partikeln, oder ausgewählt sind aus ZnO- oder Ceroxid Partikeln oder $TiO_2$-Partikeln, die optional mit Metall-Oxiden bzw. -Hydroxiden beschichtet sind.

3. Redispergierbare Nanopartikel gemäß Anspruch 1 oder 2, **dadurch gekennzeichnet, dass** die Nanopartikel eine mittlere Teilchengröße, bestimmt mittels Partikel-Korrelations-Spektroskopie bzw. Transmissionselektronenmikroskop, von 3 bis 200 nm aufweisen und die Teilchengrößenverteilung vorzugsweise eng ist.

4. Redispergierbare Nanopartikel gemäß einem oder mehreren der Ansprüche 1 bis 3, **dadurch gekennzeichnet, dass** die Oberflächenmodifizierungsmittel ausgewählt sind aus der Gruppe aus organofunktionellen Silanen, quartären Ammoniumverbindungen, Carbonsäuren, Phosphonaten, Phosphonium- und Sulfoniumverbindungen oder Gemischen hieraus.

5. Verfahren zur Herstellung von redispergierbaren Nanopartikeln gemäß Anspruch 1 umfassend die Schritte

   a) Aufbringen mindestens eines Oberflächenmodifizierungsmittels, wobei mindestens ein Oberflächenmodifizierungsmittel mindestens eine funktionelle Gruppe ausgewählt aus der Gruppe umfassend Thiole, Sulfide, Disulfide oder Polysulfide aufweist, auf in einem Lösungsmittel dispergierte Nanopartikel und
   b) radikalische Polymerisation in Gegenwart organischer Monomere, wobei das in Schritt a) aufgebrachte Oberflächenmodifizierungsmittel mit mindestens einer funktionellen Gruppe ausgewählt aus der Gruppe umfassend Thiole, Sulfide, Disulfide oder Polysulfide als Radikalkettenüberträger fungiert.

6. Verfahren gemäß Anspruch 5, **dadurch gekennzeichnet, dass** die Nanopartikel vor Aufbringen des Oberflächenmodifizierungsmittels in einem Lösungsmittel dispergiert werden.

7. Verfahren gemäß Anspruch 5, **dadurch gekennzeichnet, dass** das Lösungsmittel ausgewählt ist aus Wasser, organischen Lösungsmitteln oder aus Gemischen hieraus.

8. Verwendung redispergierbarer Nanopartikel gemäß Anspruch 1 in Formulierungen, Lacken, Farben, Kleb- und Dichtstoffen und Kunststoffen oder in deren Vorstufen.

9. Formulierungen, Lacke, Farben, Kunststoffe oder deren Vorstufen enthaltend redispergierbare Nanopartikel gemäß Anspruch 1.

10. Dispersion enthaltend redispergierbare Nanopartikel gemäß Anspruch 1.

## Claims

1. Redispersible core/shell nanoparticles, **characterised in that** the nanoparticles are surrounded by a shell comprising at least one surface modifier and a polymer,
   where at least one surface modifier contains at least one functional group selected from the group comprising thiols, sulfides, disulfides or polysulfides,
   and where the polymer is formed by free-radical polymerisation in the presence of organic monomers, where the surface modifier functions as free-radical chain-transfer agent,
   and where the nanoparticles are based on sulfates or carbonates of alkaline-earth metal compounds or on oxides or hydroxides of silicon, titanium, zinc, aluminium, cerium, cobalt, chromium, nickel, iron, yttrium or zirconium or mixtures thereof, which may optionally be coated with metal oxides or hydroxides, or on metals, such as, for example, Ag, Cu, Fe, Au, Pd, Pt or alloys, coated with metal oxides or hydroxides,
   and where the proportion of the core in the entire particle is 10-80% by weight.

2. Redispersible nanoparticles according to Claim 1, **characterised in that** the nanoparticles are selected from $SiO_2$ particles or are selected from ZnO or cerium oxide particles or $TiO_2$ particles, which are optionally coated with metal oxides or hydroxides.

3. Redispersible nanoparticles according to Claim 1 or 2, **characterised in that** the nanoparticles have an average particle size, determined by means of particle correlation spectroscopy or a transmission electron microscope, of 3 to 200 nm, and the particle size distribution is preferably narrow.

4. Redispersible nanoparticles according to one or more of Claims 1 to 3, **characterised in that** the surface modifiers are selected from the group of organofunctional silanes, quaternary ammonium compounds, carboxylic acids, phosphonates, phosphonium and sulfonium compounds or mixtures thereof.

5. Process for the production of redispersible nanoparticles according to Claim 1, comprising the steps of

   a) application of at least one surface modifier, where at least one surface modifier contains at least one functional

group selected from the group comprising thiols, sulfides, disulfides or polysulfides, to nanoparticles dispersed in a solvent, and
b) free-radical polymerisation in the presence of organic monomers, where the surface modifier containing at least one functional group selected from the group comprising thiols, sulfides, disulfides or polysulfides applied in step a) functions as free-radical chain-transfer agent.

6. Process according to Claim 5, **characterised in that** the nanoparticles are dispersed in a solvent before application of the surface modifier.

7. Process according to Claim 5, **characterised in that** the solvent is selected from water, organic solvents or mixtures thereof.

8. Use of redispersible nanoparticles according to Claim 1 in formulations, surface coatings, paints, adhesives and sealants and plastics or in precursors thereof.

9. Formulations, surface coatings, paints, plastics or precursors thereof comprising redispersible nanoparticles according to Claim 1.

10. Dispersion comprising redispersible nanoparticles according to Claim 1.

**Revendications**

1. Nanoparticules coeur/écorce redispersables, **caractérisées en ce que** les nanoparticules sont entourées d'une écorce comprenant au moins un agent de modification de surface et un polymère,
où au moins un agent de modification de surface contient au moins un groupement fonctionnel choisi dans le groupe comprenant les thiols, les sulfures, les disulfures ou les polysulfures,
et où le polymère est formé par polymérisation radicalaire en présence de monomères organiques, où l'agent de modification de surface a un rôle d'agent de transfert de chaîne radicalaire,
et où les nanoparticules sont à base de sulfates ou de carbonates de composés de métaux alcalino-terreux ou d'oxydes ou d'hydroxydes de silicium, titane, zinc, aluminium, cérium, cobalt, chrome, nickel, fer, yttrium ou zirconium ou des mélanges de ceux-ci, pouvant éventuellement être revêtus par des oxydes ou hydroxydes métalliques, ou de métaux, tels que par exemple Ag, Cu, Fe, Au, Pd, Pt ou des alliages, revêtus par des oxydes ou hydroxydes métalliques,
et où la proportion du coeur dans la particule entière est de 10-80% en poids.

2. Nanoparticules redispersables selon la revendication 1, **caractérisées en ce que** les nanoparticules sont choisies parmi des particules de $SiO_2$ ou sont choisies parmi des particules de ZnO ou d'oxyde de cérium ou des particules de $TiO_2$, qui sont éventuellement revêtues par des oxydes ou hydroxydes métalliques.

3. Nanoparticules redispersables selon la revendication 1 ou 2, **caractérisées en ce que** les nanoparticules possèdent une taille moyenne de particules, déterminée par spectroscopie de corrélation de photons ou microscopie électronique en transmission, allant de 3 à 200 nm, et la granulométrie des particules est de préférence étroite.

4. Nanoparticules redispersables selon l'une ou plusieurs parmi les revendications 1 à 3, **caractérisées en ce que** les agents de modification de surface sont choisis dans le groupe constitué par les silanes organofonctionnels, les composés d'ammonium quaternaire, les acides carboxyliques, les phosphonates, les composés de phosphonium et de sulfonium ou des mélanges de ceux-ci.

5. Procédé de production de nanoparticules redispersables selon la revendication 1, comprenant les étapes

a) d'application d'au moins un agent de modification de surface, où au moins un agent de modification de surface contient au moins un groupement fonctionnel choisi dans le groupe comprenant les thiols, les sulfures, les disulfures ou les polysulfures, à des nanoparticules dispersées dans un solvant, et
b) de polymérisation radicalaire en présence de monomères organiques, où l'agent de modification de surface contenant au moins un groupement fonctionnel choisi dans le groupe comprenant les thiols, les sulfures, les disulfures ou les polysulfures appliqué dans l'étape a) a un rôle d'agent de transfert de chaîne radicalaire.

6. Procédé selon la revendication 5, **caractérisé en ce que** les nanoparticules sont dispersées dans un solvant avant l'application de l'agent de modification de surface.

7. Procédé selon la revendication 5, **caractérisé en ce que** le solvant est choisi parmi l'eau, les solvants organiques ou des mélanges de ceux-ci.

8. Utilisation de nanoparticules redispersables selon la revendication 1, dans des formulations, des revêtements de surface, des peintures, des adhésifs et des produits d'étanchéité et des plastiques ou dans des précurseurs de ceux-ci.

9. Formulations, revêtements de surface, peintures, plastiques ou précurseurs de ceux-ci, comprenant des nanoparticules redispersables selon la revendication 1.

10. Dispersion comprenant des nanoparticules redispersables selon la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03000760 A
- DE 102005056622
- DE 102005056621
- DE 4011044 C2
- DE 3807571 A1
- DE 3706095 A1
- EP 0358153 B1
- US 4754014 A1
- DE 4421823 A1
- WO 9222615 A
- US 3479328 A1
- US 3674838 A1
- US 4126747 A1
- US 4279833 A1
- US 4340497 A1